(19) Europäisches Patentamt
European Patent Office
Office européen des brevets

(11) **EP 4 693 929 A1**

(12) **EUROPEAN PATENT APPLICATION**
published in accordance with Art. 153(4) EPC

(43) Date of publication:
**11.02.2026 Bulletin 2026/07**

(21) Application number: **24777994.5**

(22) Date of filing: **26.03.2024**

(51) International Patent Classification (IPC):
***H04B 7/0456*** (2017.01)

(52) Cooperative Patent Classification (CPC):
**H04B 7/0456; H04B 7/06; H04L 5/00; H04W 28/02**

(86) International application number:
**PCT/CN2024/083729**

(87) International publication number:
**WO 2024/199206 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 CN 202310334131**

(71) Applicant: **Apogee Networks, LLC
Dallas, TX 75201 (US)**

(72) Inventor: **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR WIRELESS COMMUNICATION**

(57) Disclosed in the present invention are a method and apparatus for wireless communication. A first node receives first signaling and a first RS, and sends first channel information and a first PMI, wherein the first signaling is used for determining the first RS; the measurement for the first RS is used for generating the first channel information and the first PMI; the first channel information depends on a first precoding matrix, and the first precoding matrix is indicated by the first PMI; and the first channel information is non-codebook based precoding information. The present application can ensure feedback performance of channel information, can avoid consuming excessive air interface overheads, and have good compatibility.

FIG. 1

## Description

## Technical Field

The present application relates to a method and an apparatus in a wireless communication system, in particular to a scheme and an apparatus for CSI (Channel Status Information) in a wireless communication system.

## Background Art

In traditional wireless communications, a UE (User Equipment) report may comprise at least one of various types of auxiliary information, such as CSI (Channel Status Information), auxiliary information related to Beam Management, auxiliary information related to positioning, etc. Among them, CSI comprises a CRI (CSI-RS Resource Indicator), an RI (Rank Indicator), a PMI (Precoding Matrix Indicator), a CQI (Channel quality indicator), etc.

A network device selects appropriate transmission parameters for the UE based on the report from the UE, such as a camping cell, an MCS (Modulation and Coding Scheme), a TPMI (Transmitted Precoding Matrix Indicator), a TCI (Transmission Configuration Indication), and other parameters. In addition, the UE report may be used for optimizing network parameters, such as achieving better cell coverage, turning base stations on or off based on the UE's location, etc.

In an NR (New Radio) system, priorities for CSI reports are defined, and the priorities are used for determining whether to allocate CPU (CSI Processing Unit) resources to corresponding CSI reports for updates, or whether to drop the corresponding CSI reports.

As the number of antennas increases, conventional PMI feedback methods bring a large amount of redundant overhead. Therefore, in NR R (release) 18, CSI compression based on AI (Artificial Intelligence) or ML (Machine Learning) was initiated.

## Summary of the Invention

In conventional schemes, a base station configures the type of CSI to be reported for one RS (Reference Signal) resource; and through research, the applicant has found that the existing schemes for configuring CSI types may not be applicable to new channel information.

In view of the above problems, the present application discloses a solution. It should be noted that, although a large number of embodiments of the present application are set forth with a focus on AI/ML, the present application is also applicable to conventional schemes, such as those based on linear channel reconstruction; and in particular, it is to be considered that specific channel reconstruction algorithms are likely to be non-standardized or implemented independently by hardware device vendors. Further, the adoption of a unified UE (User Equipment) report scheme can reduce implementation complexity or improve performance. In case of no conflict, embodiments in any node of the present application and features in the embodiments can be applied to any other node. In case of no conflict, the embodiments and features in the embodiments of the present application may be arbitrarily combined with each other.

When necessary, interpretations of terms in the present application may refer to descriptions in 3GPP (3rd Generation Partnership Project) specification protocols TS37 series and TS38 series.

The present application discloses a method used in a first node for wireless communication, comprising:

receiving first signaling and a first RS;

and transmitting first channel information and a first PMI,

wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

As one embodiment, the above method can balance the accuracy of channel information report and air interface overhead, for example, by allocating the air interface overhead occupied by the first PMI and the first channel information.

As one embodiment, the above method can balance the reliability of channel information report, for example, by depending on the first PMI even when the first channel information is unreliable.

Specifically, according to one aspect of the present application, the above method is characterized in that the measurement for the first RS is used for generating a first channel matrix, and the first channel matrix is used for generating the first precoding matrix and the first channel information.

As one embodiment, the above embodiments balance the accuracy of the channel information of the first channel matrix and air interface overhead.

As one embodiment, the above embodiments avoid estimating excessive raw channel matrices, simplify computational complexity, and maintain good compatibility.

Specifically, according to one aspect of the present application, the above method is characterized by comprising:

transmitting a first CQI,

wherein generation of the first CQI depends on the first channel matrix.

As one embodiment, the above method avoids CQI distortion caused by misunderstanding of the first channel information by the first node and a recipient of the first channel information.

Specifically, according to one aspect of the present application, the above method is characterized in that any precoding vector used for generating the first channel information is orthogonal to the corresponding precoding vector in the first precoding matrix.

As one embodiment, any precoding vector used for generating the first channel information and the corresponding precoding vector in the first precoding matrix represent projections of one precoding vector onto two mutually orthogonal vectors.

The above aspects and embodiments can reduce the air interface overhead of the first channel information or improve the robustness of a generator of the first channel information.

In addition, the above aspects and embodiments facilitate the recipient's assessment of the reliability of the first channel information or the reliability of the precoding matrix reconstructed based on the first channel information.

Specifically, according to one aspect of the present application, the above method is characterized by comprising:

receiving second signaling,
wherein for configuration of the first signaling, the second signaling is used for determining to stop the transmission of the non-codebook based precoding information.

As one embodiment, for the configuration of the first signaling, the second signaling is not used for stopping the transmission of a PMI.

As one embodiment, the first signaling is RRC signaling, and the second signaling is RRC signaling.

When the non-codebook based precoding information is unreliable or unnecessary, the above aspects can reduce air interface overhead.

In addition, the above aspects or embodiments can promptly stop or start the transmission of the non-codebook based precoding information.

Specifically, according to one aspect of the present application, the above method is characterized in that the first channel information and the first PMI are used by the recipient for determining whether to stop the transmission of the non-codebook based precoding information.

The above aspects avoid introducing new report information (e.g., the raw channel matrix) to monitor performance of the non-codebook based precoding information, particularly considering that the channel matrix recovered by the recipient may be unknown to the first node.

The present application discloses a method used in a second node for wireless communication, comprising:

transmitting first signaling and a first RS; and
receiving first channel information and a first PMI, wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

Specifically, according to one aspect of the present application, the above method is characterized by comprising:

a second receiver receiving a first CQI,
wherein generation of the first CQI depends on a first channel matrix, the measurement for the first RS is used for generating the first channel matrix, and the first channel matrix is used for generating the first precoding matrix and the first channel information.

Specifically, according to one aspect of the present application, the above method is characterized by comprising:

transmitting second signaling,
wherein for configuration of the first signaling, the second signaling is used for determining to stop the transmission of the non-codebook based precoding information.

Specifically, according to one aspect of the present application, the above method is characterized by comprising:
determining whether to stop the transmission of the non-codebook based precoding information based on the first channel information and the first PMI.

The present application discloses a first node used for wireless communication, comprising:

a first receiver receiving first signaling and a first RS; and
a first transmitter transmitting first channel information and a first PMI,
wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

The present application discloses a second node used for wireless communication, comprising:

a second transmitter transmitting first signaling and a first RS; and

a second receiver receiving first channel information and a first PMI,

wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

## Brief Description of the Drawings

Other features, purposes and advantages of the present application will become more apparent from reading the detailed description of the non-limiting embodiments made with reference to the following drawings:

FIG. 1 shows a flowchart of communication of a first node according to one embodiment of the present application;

FIG. 2 shows a schematic diagram of a network architecture according to one embodiment of the present application;

FIG. 3 shows a schematic diagram of an embodiment of a radio protocol architecture for a user plane and a control plane according to one embodiment of the present application;

FIG. 4 shows a schematic diagram of a hardware module of a communication node according to one embodiment of the present application;

FIG. 5 shows a flowchart of transmission between a first node and a second node according to one embodiment of the present application;

FIG. 6 shows a schematic diagram of a CSI reference resource in frequency domain according to one embodiment of the present application;

FIG. 7 shows a schematic diagram of an artificial intelligence processing system according to one embodiment of the present application;

FIG. 8 shows a flowchart of transmission of first channel information according to one embodiment of the present application;

FIG. 9 shows a schematic diagram of a first encoder according to one embodiment of the present application;

FIG. 10 shows a schematic diagram of a first function according to one embodiment of the present application;

FIG. 11 shows a schematic diagram of one decoding layer group according to one embodiment of the present application;

FIG. 12 shows a structural block diagram of a processing apparatus used in a first node according to one embodiment of the present application;

FIG. 13 shows a structural block diagram of a processing apparatus used in a second node according to one embodiment of the present application;

FIG. 14 shows a flowchart of measurements in a first RS resource according to one embodiment of the present application;

FIG. 15 shows a schematic diagram of a CSI reference resource in time domain according to one embodiment of the present application; and

FIG. 16 shows a schematic diagram of time domain resources occupied by CSI according to one embodiment of the present application.

## Detailed Description of Embodiments

The technical solution of the present application will be further described in detail below in conjunction with the drawings. It should be noted that, in case of no conflict, embodiments and features in the embodiments in the present application may be arbitrarily combined with each other.

### Embodiment 1

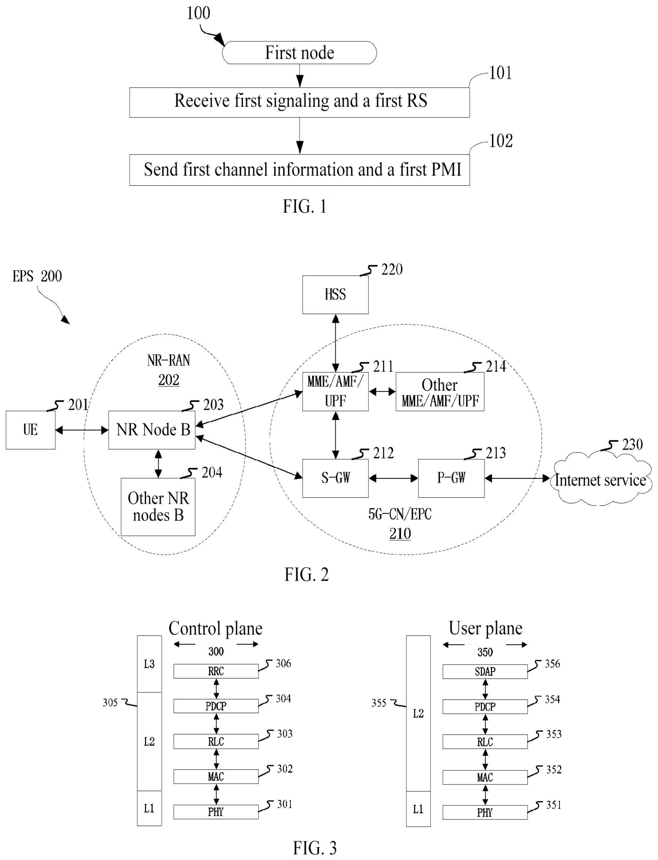

Embodiment 1 illustrates a flowchart of communication of a first node according to one embodiment of the present application, as shown in FIG. 1.

A first node 100 receives first signaling and a first RS in step 101; and transmits first channel information and a first PMI in step 102.

In Embodiment 1, the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

Typically, transmission of the first channel information and the first PMI depends on configuration of the first signaling, and the first signaling is RRC layer signaling.

As one embodiment, a transmission time of the first signaling may be before, after, or between transmission times of the first RS (for example, the first RS is periodically transmitted).

As one embodiment, the first signaling comprises one RRC (Radio Resource Control) IE (Information Element).

As one embodiment, the first signaling is a *CSI-ReportConfig* IE.

As one embodiment, the first signaling comprises a first identity, and the first identity is used for indicating the first RS.

As one embodiment, the first identity is CSI-ResourceConfigId.

As one embodiment, RS resources occupied by the first RS belong to one CSI-RS resource set, and the measurement for the first RS comprises channel measurement.

As one embodiment, the first RS occupies one CSI-RS resource, and the measurement for the first RS comprises channel measurement.

As one sub-embodiment of the above embodiments, the one CSI-RS resource is a non-zero power CSI-RS resource.

As one embodiment, the first RS occupies a plurality of CSI-RS resources, and the measurement for the first RS comprises channel measurement and interference measurement.

As one embodiment, the first RS comprises one SSB (SS/PBCH Block, Synchronization Signal/Physical Broadcast Channel Block), and the measurement for the first RS comprises channel measurement.

As one embodiment, the first channel information and the first PMI are transmitted in the same physical layer channel.

The above embodiments implicitly associate the first channel information with the first PMI, avoiding additional signaling overhead.

As one embodiment, the first channel information and the first PMI are transmitted in different physical layer channels.

As one embodiment, the physical layer channel is a PUCCH (Physical Uplink Control Channel) or a PUSCH (Physical Uplink Shared Channel).

As one embodiment, the first signaling configures report periods for a PMI and the non-codebook based precoding information, respectively.

As one embodiment, a report period configured for a PMI by the first signaling is greater than a report period configured for the non-codebook based precoding information.

The above embodiments can reduce signaling overhead.

As one embodiment, the first precoding matrix is used for generating the first channel information.

As one embodiment, the first channel information represents one precoding vector, and the first precoding matrix comprises only one precoding vector.

As one embodiment, diagonal elements of a matrix obtained by multiplying a conjugate transpose of a precoding matrix represented by the first channel information by the first precoding matrix are all 0.

As one embodiment, channel parameters recovered by a recipient of the non-codebook based precoding information based on the received non-codebook based precoding information are unknown to the first node.

The advantage of the above embodiments is that they allow the transmitter and recipient of the first channel information to use independent methods (reconstructors) to reconstruct channel parameters based on the first channel information, providing greater implementation freedom and avoiding unfairness for different hardware vendors.

As one embodiment, a generator used for generating the non-codebook based precoding information is obtained based on training.

The above embodiments are particularly suitable for CSI feedback based on AI or ML.

As one embodiment, the non-codebook based precoding information does not belong to CSI defined in 3GPP Rel (Release)-17 or releases prior to 3GPP Rel-17.

As one embodiment, the measurement for the first RS is used for generating the first channel matrix, and the first channel matrix is used for generating the first precoding matrix and the first channel information.

Generally, an algorithm used for the measurement for the first RS is determined by the first node itself. Typical channel estimation algorithms comprise linear interpolation, FFT (fast Fourier transform) filtering, Wiener filtering, one-dimensional MMSE (minimum mean square error) filtering, etc.

Several specific implementations of the first channel matrix are provided below.

As one embodiment, the first channel matrix is a matrix with R rows and t columns, wherein t is the number of antenna ports corresponding to the first RS, and R is a positive integer.

As one sub-embodiment of the above embodiments, each element in the first channel matrix represents channel impulse response between one antenna port transmitting the first RS and one receiving antenna.

As one sub-embodiment of the above embodiments, the first channel matrix is a raw channel matrix.

As one embodiment, R is the number of receiving antennas of the first node.

As one embodiment, R is not greater than the number of receiving antennas of the first node.

As one embodiment, the first node transmits uplink signaling, and the uplink signaling is used for determining R.

As one embodiment, the uplink signaling is used for reporting UE (User Equipment) capability of the first node.

As one embodiment, R is determined by the first node itself.

As one embodiment, the first channel matrix is a matrix with t rows and r columns, wherein t is the number of antenna ports corresponding to the first RS, and r is a positive integer not greater than t.

As one sub-embodiment of the above embodiments, each column in the first channel matrix represents a precoding vector for one MIMO (Multiple Input Multiple Output) layer.

As one sub-embodiment of the above embodiments, how to calculate the first channel matrix is generally determined by the first node itself; and for example, the following is obtained by performing SVD (Singular Value Decomposition) on the raw channel matrix:

$$H_{m \times n} = U_{m \times m} \cdot D_{m \times n} \cdot V^{\sim}_{n \times n}$$

wherein $H_{m \times n}$ is one raw channel matrix with m rows and n columns, $U_{m \times m}$, $D_{m \times n}$, $V^{\sim}_{n \times n}$ are three matrices obtained through SVD, wherein a superscript ~ represents the conjugate transpose; and the first channel matrix comprises p columns on the left side of $V_{n \times n}$, and p is a positive integer not greater than n.

To reduce the computational complexity, the first channel matrix may also be composed of one or more predefined column vectors. Criteria for selecting a column vector comprise maximum channel capacity, or maximum projection, etc.

As one embodiment, r is indicated by an RI (Rank Indicator) reported by the first node.

As one embodiment, r is 1.

As one embodiment, the first node transmits a first CQI,

wherein generation of the first CQI depends on the first channel matrix.

As one embodiment, calculation of the first CQI is based on an assumption that the first channel matrix is used for precoding.

As one embodiment, the first CQI indicates the most efficient modulation mode and coding rate that one (virtual, or not actually transmitted) PDSCH transmitted on a CSI reference resource can support under a condition that a BLER (Block Error Rate) does not exceed 0.1. The precoding of this PDSCH uses the first channel matrix.

Typically, the number of rows of the precoding matrix represented by the first channel information is the same as the number of rows of the first precoding matrix.

Typically, any column vector of the precoding matrix represented by the first channel information represents one precoding vector, and any column vector of the first precoding matrix represents one precoding vector.

Typically, any precoding vector represented by the first channel information corresponds to one precoding vector represented by the first precoding matrix.

As one embodiment, dimensions (i.e., the number of rows and the number of columns) of the precoding matrix represented by the first channel information are the same as dimensions (i.e., the number of rows and the number of columns) of the first precoding matrix.

As one sub-embodiment of the above embodiments, any column vector represented by the first channel information corresponds to a column vector at the same position represented by the first precoding matrix.

As one embodiment, the number of rows of the precoding matrix represented by the first channel information is the same as the number of rows of the first precoding matrix, and the number of columns of the precoding matrix represented by the first channel information is smaller than the number of columns of the first precoding matrix.

As one sub-embodiment of the above embodiments, any column vector represented by the first channel information corresponds to a column vector at the same position starting from the left represented by the first precoding matrix.

As one embodiment, any precoding vector used for generating the first channel information is orthogonal to the corresponding precoding vector in the first precoding matrix.

As one embodiment, the precoding vector obtained by vector addition of any precoding vector used for generating the first channel information and the corresponding precoding vector in the first precoding matrix is an ideal precoding vector of the corresponding MIMO layer (e.g., the corresponding column vector in $V_{n \times n}$).

As one embodiment, any precoding vector used for generating the first channel information is obtained by vector subtraction of the ideal precoding vector of the corresponding MIMO layer from the corresponding precoding vector in the first precoding matrix.

As one embodiment, any precoding vector for the first channel information is generated by projecting the ideal precoding vector of the corresponding MIMO layer onto an orthogonal basis space of the corresponding precoding vector in the first precoding matrix.

As one embodiment, one precoding vector used for generating the first channel information is:

$$V_{t \times 1} - \alpha \cdot W_{t \times 1}$$

wherein $V_{t \times 1}$ is a vector with t rows and 1 column, i.e., the ideal precoding vector; $W_{t \times 1}$ is a vector with t rows and 1 column, and is one column vector in the first precoding matrix indicated by the first PMI; and $\alpha = |V^{\sim}_{t \times 1} \cdot W_{t \times 1}|$, wherein the superscript ~ indicates a conjugate transpose, and | | indicates a modulo operation.

As one embodiment, any precoding vector used for generating the first channel information is approximately orthogonal to the corresponding precoding vector in the first precoding matrix.

Taking column vectors as an example, two vectors being approximately orthogonal means that the modulus of a complex number obtained by multiplying the conjugate transpose of one vector by the other vector divided by a first parameter is less than or not greater than a specific threshold, and the first parameter is the product of the moduli of the two vectors; and the specific threshold is configurable.

Compared to complete orthogonality, the above approximately orthogonal scheme provides greater flexibility for the first node to feed back the first channel information and the first PMI.

As one embodiment, the ideal precoding vector is in a spatial-frequency domain.

As one embodiment, the ideal precoding vector is an angular-delay domain projection.

As one embodiment, the ideal precoding vector is used for determining a phase, an amplitude, or both of the phase and the amplitude of each antenna port when a plurality of antenna ports are superimposed onto one MIMO layer.

As one embodiment, the first precoding matrix is one matrix in a Type I Single-Panel codebook.

As one embodiment, the first precoding matrix is one matrix in a Type I Multi-Panel codebook.

As one embodiment, the first precoding matrix is one matrix in a Type II codebook.

As one embodiment, the first precoding matrix is one matrix in an Enhanced Type II Codebook.

As one embodiment, the first precoding matrix is one matrix in the Enhanced Type II Codebook.

As one embodiment, the first precoding matrix is one matrix in a Type II Port Selection Codebook.

As one embodiment, the first precoding matrix is one matrix in an Enhanced Type II Port Selection Codebook.

As one sub-embodiment of any of the above 7 embodiments, the first precoding matrix is one matrix in the codebook indicated by the first PMI multiplied by one coefficient.

As one embodiment, the one coefficient is a non-negative real number.

As one embodiment, the first node transmits uplink control information to indicate the one coefficient.

As one embodiment, the one coefficient is not greater than 1 and not less than 0.

As one embodiment, the one coefficient, the first channel information, and the first PMI are transmitted in the same physical layer channel.

As one embodiment, the one coefficient and the first channel information are transmitted in one physical layer channel, and the first PMI is transmitted in another physical layer channel.

The above method minimizes CSI air interface overhead as much as possible while ensuring accuracy.

As one embodiment, the at least first RS is indicated by resourcesForChannelMeasurement in the first signaling, or csi-IM-ResourcesForInterference in the first signaling, or nzp-CSI-RS-ResourcesForInterference in the first signaling.

As one embodiment, the first channel information and the first PMI are for a channel on the same BWP (Bandwidth Part).

As one embodiment, the first channel information and the first PMI are respectively for one subband.

As one embodiment, the first channel information is for one subband; and the first PMI is wideband, or is for all subbands in one BWP.

As one embodiment, one subband comprises a positive integer number of PRBs (Physical Resource Blocks) in frequency domain.

### Embodiment 2

Embodiment 2 illustrates a schematic diagram of a network architecture according to one embodiment of the present application, as shown in FIG. 2. FIG. 2 illustrates a system architectures of 5G NR (NewRadio), LTE (Long-Term Evolution) and LTE-A (Long-Term Evolution Advanced). The 5G NR or LTE network architecture 200 may be referred to as 5GS (5GSystem)/EPS (Evolved Packet System), or some other suitable terms. The EPS 200 may comprise one piece of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to networks providing circuit switching services or other cellular networks. The NG-RAN comprises an NR node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP, or some other suitable terms. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, and the S-GW212 itself is connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application, and the gNB203 corresponds to a second node in the present application.

As one embodiment, the UE201 supports generating reports using AI (Artificial Intelligence) or machine learning.

As one embodiment, the UE201 supports generating a trained model using training data, or generating part of parameters in a trained model using trained data.

As one embodiment, the UE201 supports determining at least part of parameters of a CNN (Convolutional Neural Network) for CSI reconstruction through training.

As one embodiment, the UE201 supports determining a transformer for CSI reconstruction through training.

As one embodiment, the UE201 is a terminal that supports Massive-MIMO.

As one embodiment, the gNB203 supports Massive-MIMO-based transmission.

As one embodiment, the gNB203 supports decompressing CSI using AI or deep learning.

As one embodiment, the gNB203 is a Macro-Cellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency difference.

As one embodiment, the gNB203 is one flying platform device.

As one embodiment, the gNB203 is a satellite device.

As one embodiment, the first node and the second node in the present application are the UE201 and the gNB203, respectively.

**Embodiment 3**

Embodiment 3 shows a schematic diagram of one embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first node device (UE, or an RSU, an on-board device, or an on-board communication module in V2X) and a second node device (a gNB, UE, or an RSU, an on-board device, or an on-board communication module in V2X), or between two pieces of UE, using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. A Layer 2 (L2 layer) 305 is above the PHY301, and is responsible for links between the first node device and the second node device, and between the two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second node device. The PDCP sublayer 304 provides data encryption and integrity protection, and the PDCP sublayer 304 also provides handover support of the first node device to the second node device. The RLC sublayer 303 provides data packet segmentation and reassembly, and retransmits lost data packets through an ARQ. The RLC sublayer 303 also provides duplicate data packet detection and protocol error detection. The MAC sublayer 302 provides mapping between a logical channel and a transport channel and multiplexing of the logical channel. The MAC sublayer 302 is also responsible for allocating various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 as for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides packet header compression for upper layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS flow and a data radio bearer (DRB) to support the diversity of services. Although not shown in the figure, the first node device may have several upper layers above the L2 layer 355, comprising a network layer (e.g., an IP layer) terminating at the P-GW on the network side and an application layer terminating at the other end of the connection (e.g., a remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, a reference signal in the present application is generated in the PHY301.

As one embodiment, first channel information and a first PMI in the present application are generated in the PHY301.

As one embodiment, first control information in the present application is generated in the PHY301.

As one embodiment, the first channel information in the present application is generated in the MAC sublayer 302.

As one embodiment, a first CQI in the present application is generated in the PHY301.

As one embodiment, first signaling in the present application is generated in the RRC sublayer 306.

As one embodiment, second signaling in the present application is generated in the MAC sublayer 302 or the PHY301.

## Embodiment 4

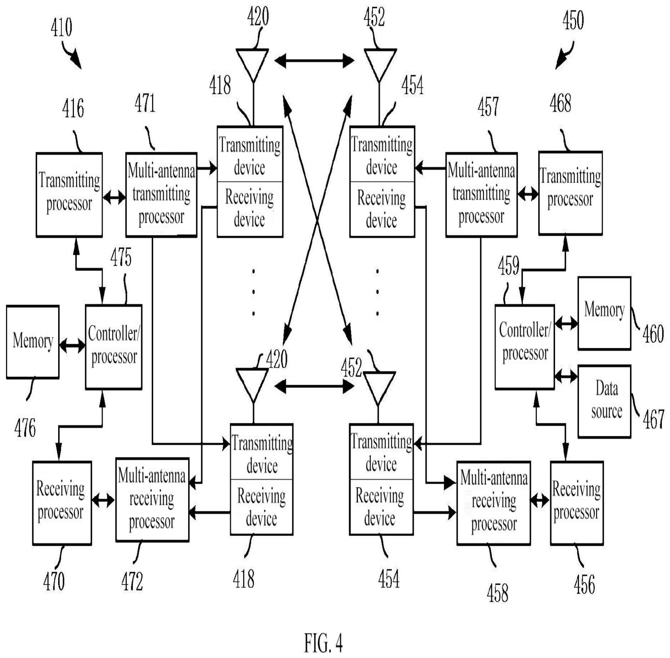

Embodiment 4 illustrates a schematic diagram of a hardware module of a communication node according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets, and signaling to the first communication device 450. The transmitting processor 416 and the multi-antenna transmitting processor 471 implement various signal processing functions for an L1 layer (i.e., physical layer). The transmitting processor 416 implements channel coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook based precoding and beamforming processing on the coded and modulated symbols to generate one or more spatial streams. The transmitting processor 416 then maps each spatial stream to a subcarrier, multiplexes with a reference signal (e.g., a pilot) in time domain and/or frequency domain, and then uses an inverse fast Fourier transform (IFFT) to generate a physical channel carrying a time-domain multi-carrier symbol stream. The multi-antenna transmitting processor 471 then performs transmitting analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a Fast Fourier Transform (FFT) to convert the baseband multi-carrier symbol stream subjected to the receiving analog precoding/beamforming operation from the time domain to the frequency domain. In frequency domain, a physical layer data signal and a reference signal are demultiplexed by the receiving processor 456, wherein the reference signal is to be used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and soft decisions are generated. The receiving processor 456 then deinterleaves and channel-decodes the soft decisions to recover the upper layer data and control signals transmitted by the second communication device 410 on the physical channel. The upper-layer data and control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second node 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmitting function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for the user plane and the control plane. The controller/processor 459 is also responsible for retransmission of lost packets, and signaling to the second communication device 410. The transmitting processor 468 executes channel coding, interleaving, and modulation mapping, the multi-antenna transmitting processor 457 performs digital multi-antenna spatial precoding, comprising codebook-based precoding and non-codebook based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts a baseband symbol stream provided by the multi-antenna transmitting processor 457 into a radio frequency stream, which is then provided to the antenna 452.

In the transmission from the first communication device 450 to the second communication device 410, the function at the second communication device 410 is similar to the receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/-processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 apparatus comprises: at least one processor and at least one memory, the at least one memory comprising a computer program code; the at least one memory and the computer program code being configured to be used together with the at least one processor, the first communication device 450 apparatus at least: receives first signaling and a first RS; and transmits first channel information and a first PMI, wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

A first message is received, the first message being used for determining at least a first RS resource; and the first channel information and the first PMI in a first physical layer channel are transmitted, wherein measurement for the first RS resource is used for generating the first channel information and the first PMI.

As one embodiment, the first communication device 450 comprises: a memory storing a computer-readable instruction program, wherein the computer-readable instruction program generates an action when executed by at least one processor, and the action comprises: receiving the first signaling and the first RS; and transmitting the first channel information and the first PMI, wherein the first signaling is used for determining the first RS; the measurement for the first RS is used for generating the first channel information and the first PMI; the first channel information depends on the first precoding matrix, and the first precoding matrix is indicated by the first PMI; and the first channel information is the non-codebook based precoding information.

As one embodiment, the second communication device 410 apparatus comprises: at least one processor and at least one memory, wherein the at least one memory comprises a computer program code; and the at least one memory and the computer program code are configured to be used together with the at least one processor. The second communication device 410 apparatus at least: transmits the first signaling and the first RS, wherein a second receiver receives the first channel information and the first PMI.

As one embodiment, the second communication device 410 apparatus comprises: a memory storing a computer-readable instruction program, wherein the computer-readable instruction program generates an action when executed by at least one processor, and the action comprises: transmitting the first signaling and the first RS, wherein the second receiver receives the first channel information and the first PMI.

As one embodiment, the first communication device 450 corresponds to a first node in the present application.

As one embodiment, the second communication device 410 corresponds to a second node in the present application.

As one embodiment, the first communication device 450 is one piece of UE, and the second communication device 410 is one base station.

As one embodiment, the antenna 452, the receiving device 454, the multi-antenna receiving processor 458, and the receiving processor 456 are used for the measurement indicating the first RS.

As one embodiment, the controller/processor 459 is used for the measurement indicating the first RS.

As one embodiment, the controller/processor 459 is used for generating the first channel information.

As one embodiment, the controller/processor 459 is used for generating the first PMI.

As one embodiment, the antenna 452, the transmitting device 454, the multi-antenna transmitting processor 457, the transmitting processor 468, and the controller/processor 459 are used for transmitting the first channel information.

As one embodiment, the antenna 420, the transmitting device 418, the multi-antenna transmitting processor 471, and the transmitting processor 416 are used for transmitting the first RS.

As one embodiment, the controller/processor 475 is used for transmitting the first signaling.

As one embodiment, the controller/processor 475 is used for transmitting the first RS.

As one embodiment, the antenna 420, the receiving device 418, the multi-antenna receiving processor 472, the receiving processor 470, and the controller/processor 475 are used for receiving the first channel information.

As one embodiment, the antenna 420, the receiving device 418, the multi-antenna receiving processor 472, the receiving processor 470, and the controller/processor 475 are used for receiving the first PMI.

**Embodiment 5**

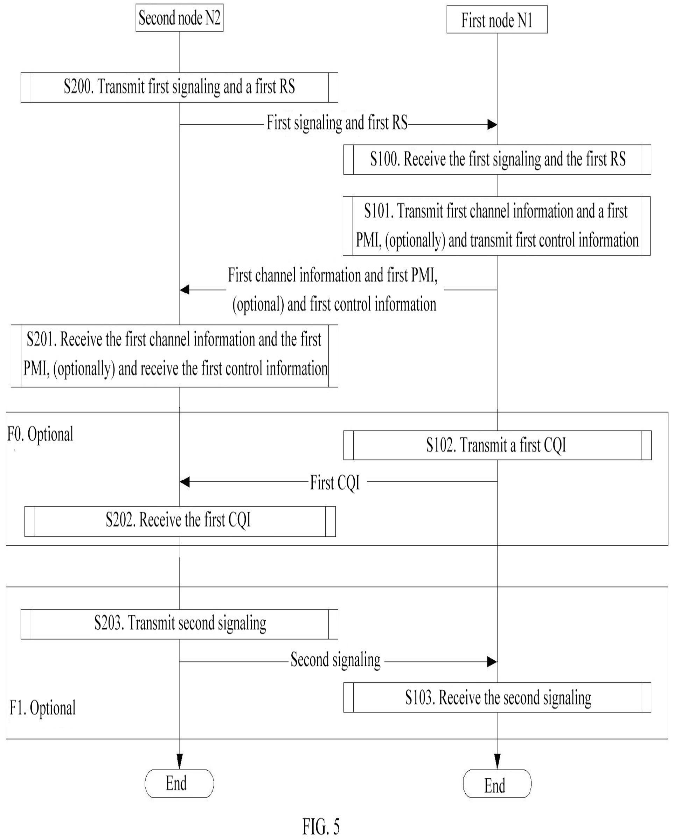

Embodiment 5 illustrates a flowchart of transmission between a first node and a second node according to one embodiment of the present application, as shown in FIG. 5. In FIG. 5, steps in blocks F0 and F1 are respectively optional.

For a first node N1, first signaling and a first RS are received in step S100; and first channel information and a first PMI are transmitted in step S101.

For a second node N2, the first signaling and the first RS are transmitted in step S200; and the first channel information and the first PMI are received in step S201.

In Embodiment 5, the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

As one embodiment, a priority of the first PMI is higher than a priority of the first channel information.

Considering that the first channel information can be considered one correction of actual channel parameters based on the first PMI, the above embodiments can ensure precoding gain when air interface transmission resources or hardware computing power are limited.

As one embodiment, lower-priority CSI is preferentially dropped or omitted.

As one embodiment, when a capacity of the occupied physical layer channel is limited, higher-priority CSI is transmitted and lower-priority CSI is dropped.

As one embodiment, higher-priority CSI is preferentially allocated a computing unit or is preferentially updated.

As one embodiment, the first node N1 transmits a first CQI in step S102; and the second node N2 receives the first CQI in step S202.

As one embodiment, calculation of the first CQI is conditioned on the first PMI.

One advantage of the above embodiments is that the first node N1 and the second node N2 have the same understanding of the calculation of the first CQI, especially considering that a precoding matrix recovered by the second node N2 based on the first channel information may be unknown to the first node; and another advantage of the above embodiments is that it enables the reported CQI to reflect the precoding gain as much as possible while maintaining good compatibility with existing systems.

As one embodiment, the calculation of the first CQI does not depend on the first channel information.

As one embodiment, the first node N1 receives second signaling in step S103; and the second node N2 transmits the second signaling in step S203, wherein for configuration of the first signaling, the second signaling is used for determining to stop the transmission of the non-codebook based precoding information.

As one embodiment, for the configuration of the first signaling, the second signaling is not used for stopping the transmission of a PMI.

As one embodiment, the first signaling is RRC signaling, and the second signaling is a MAC (Medium Access Control) CE (Control Element).

As one embodiment, the first signaling is RRC signaling, and the second signaling is DCI (Downlink Control Information).

As one embodiment, the second node N2 itself determines the transmission timing of the second signaling.

As one embodiment, the received non-codebook based precoding information is used for determining the transmission timing of the second signaling.

The specific algorithm can be implemented by the hardware device vendor. One non-limiting embodiment comprises:

the second node N2 recovers a reference column vector based on the received non-codebook based precoding information, calculates the correlation between the reference column vector and the corresponding codebook-based column vector, and determines whether to transmit the second signaling based on the calculated correlation; for example, when the correlation is greater than a first threshold, the second signaling is transmitted; when the correlation is not greater than the first threshold, the second signaling is not transmitted; the first threshold is a real number less than (or not greater than) 1 and greater than (or not less than) 0; and the correlation between two column vectors is obtained by multiplying a conjugate transpose of one column vector by another column vector. To prevent burst errors, correlations between a plurality of reference column vectors and corresponding codebook-based column vectors may be calculated, and the average of the plurality of correlations may be compared with the first threshold.

The above embodiments avoid the first node N1 from additionally transmitting, for example, an original channel information to assist the second node N2 in monitoring the quality of the non-codebook based precoding information, thereby saving air interface overhead and improving spectrum efficiency.

As one embodiment, the received first channel information is used for recovering at least one reference column vector, each of the at least one reference column vector corresponding to one column vector in the first precoding matrix.

As one embodiment, transmitting of the first channel information and the first PMI depends on the configuration of the first signaling, the first signaling comprises a first index, the first index is used for indicating at least one RS resource, the first RS occupies a first RS resource, and the first RS resource is one of the at least one RS resource.

As one embodiment, a CSI reference resource for the first PMI comprises a CSI reference resource for the first channel information.

The CSI reference resource is a frequency domain resource and a time domain resource associated with the corresponding CSI report.

Taking an NR system as an example: in frequency domain, the CSI reference resource comprises a set of downlink PRBs, and this set of PRBs corresponds to a band associated with the derived CSI; and in time domain, the CSI reference resource comprises one downlink slot, and this downlink slot is the n-th slot before an uplink slot occupied by the corresponding CSI report (i.e., a first physical layer channel), n being a non-negative integer. For the specific definition of the CSI reference resource in the NR system, reference may be made to Chapter 5.2.2.5 of TS38.214.

As one embodiment, the measurement for the first RS is used for generating a first channel matrix, and the first channel matrix is used for generating the first precoding matrix and the first channel information.

As one embodiment, any precoding vector used for generating the first channel information is orthogonal to the corresponding precoding vector in the first precoding matrix.

As one embodiment, any precoding vector used for generating the first channel information and the corresponding precoding vector in the first precoding matrix represent projections of one precoding vector onto two mutually orthogonal vectors.

As one embodiment, the one precoding vector is an ideal precoding vector corresponding to an MIMO layer for any precoding vector.

As one embodiment, the first channel matrix is composed of at least one ideal precoding vector.

As one embodiment, the non-codebook based precoding information comprising the first channel information and a PMI comprising the first PMI are used by a recipient (or the second node N2) for determining whether to stop the transmission of the non-codebook based precoding information.

As one embodiment, the first node N1 transmits first control information in step S101, and the second node N2 receives the first control information in step S201,

wherein the first control information indicates frequency domain resources for the first channel information, and the frequency domain resources for the first channel information are subsets of frequency domain resources for the first PMI.

As one embodiment, frequency domain resources for the first PMI comprise a plurality of subbands, and the frequency domain resources for the first channel information are part of or all of the plurality of subbands.

As one sub-embodiment of the above embodiments, the first node N1 transmits at least one piece of channel information in step S101, and the first node N1 receives at least one piece of channel information in step S201, wherein the first control information is used for indicating at least one subband in the plurality of subbands, and the at least one piece of channel information corresponds one-to-one with the at least one subband; and each channel information of the at least one piece of channel information is non-codebook based precoding information for one of the at least one subband, and the first channel information is one piece of the at least one piece of channel information.

One advantage of the above embodiments is that the first node can flexibly indicate the subbands for which non-codebook based channel information feedback is required, thereby improving feedback efficiency or reducing air interface overhead. The first node can independently determine which subbands do not require feedback of non-codebook based precoding information; and possible motivations for avoiding transmitting non-codebook based precoding information comprise: the generated non-codebook based channel information is inaccurate, the codebook-based precoding information (i.e., a PMI) can already accurately reflect the channel parameters, etc.

As one embodiment, the first control information uses a bitmap method to indicate the at least one subband from the plurality of subbands.

As one embodiment, the first control information uses a bitmap method to indicate the at least one subband from all subbands of one BWP.

As one embodiment, the plurality of subbands depend on an indication of the first signaling, and the plurality of subbands are subsets of all subbands that constitute one BWP.

As one embodiment, csi-ReportingBand in the first signaling indicates the plurality of subbands.

Generally, how to select the first precoding matrix from the valid codebook is implementation-related and is determined by each manufacturer itself; and common schemes comprise maximum spatial projection, or maximum channel capacity, etc. A typical but non-restrictive implementation is described below:

the first node N1 first measures a downlink RS (e.g., the first RS) to obtain the raw channel matrix (or a precoding matrix indicated by the first channel information) $H_{r \times t}$, wherein $r,t$ are the number of receiving antennas and the number of antenna ports used for transmitting, respectively; under the condition of using a precoding matrix $W_{t \times l}$, the encoded channel parameter matrix is $H_{r \times t} \cdot W_{t \times l}$, wherein $l$ is a rank or the number of layers; and an equivalent channel capacity of $H_{r \times t} \cdot W_{t \times l}$ is calculated using the criteria such as an SINR (Signal Interference Noise Ratio), an EESM (Exponential Effective SINR Mapping), or an RBIR (Received Block Mean Mutual Information Ratio). Further, the calculation of the equivalent channel capacity may also take into account the noise and interference estimated by the first node N1. If the downlink RS comprises RS resources used for interference measurement, the first node N1 can use these RS resources to measure interference or noise more accurately. The first node N1 selects a precoding matrix corresponding to the maximum equivalent channel capacity from the valid codebook as the first precoding matrix.

As one embodiment, the first CQI is determined from the equivalent channel capacity by means of table lookup or other methods.

It should be additionally noted that, when the first node N1 and the second node N2 use different channel reconstruction models, their understandings of the precoding matrix indicated by the first channel information may differ.

Typically, the first channel information is generated based on an artificial intelligence method.

Typically, a first encoder is used for generating the first channel information, and the first encoder is obtained based on training.

The above method allows the first node N1 and the second node N2 to use differently trained models, thereby increasing the flexibility for hardware manufacturers.

**Embodiment 6**

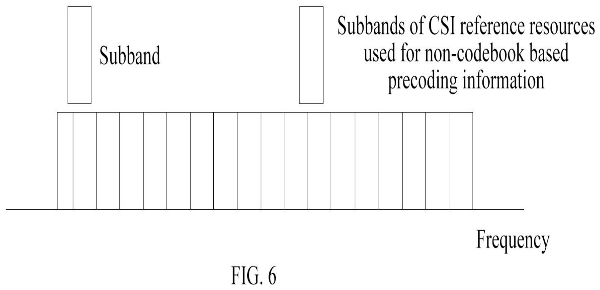

Embodiment 6 illustrates a schematic diagram of a CSI reference resource in frequency domain according to one embodiment of the present application, as shown in FIG. 6. In FIG. 6, one square represents one subband, wherein the gray-filled square represents one subband used for non-codebook based CSI reference resources.

The subbands in FIG. 6 all belong to a first BWP or constitute the first BWP. Except for the edge-most subband in the first BWP, the number of PRBs comprised in one subband is P1, and P1 is a positive integer multiple of 4; and P1 is indicated by higher-layer signaling, alternatively, P1 is related to the number of PRBs comprised in the first BWP.

As one embodiment, the number of PRBs comprised in the subband with the lowest frequency domain position in the first BWP is P1 - (Ns mod P1), wherein Ns is an index of a starting PRB in the first BWP; and the number of PRBs comprised in the last subband (i.e., a subband with the highest frequency domain position) in the first BWP is (Ns + Nw) mod P1 or is P1, wherein Nw is the number of PRBs comprised in the first BWP.

As an embodiment, P1 is one of 4, 8, 16, or 32.

Any subband (shown in gray-filled squares) used for non-codebook based CSI reference resources in FIG. 6 corresponds to at least one codebook-based precoding matrix of one codebook-based precoding matrix and one piece of non-codebook based precoding information.

As one embodiment, all subbands used for non-codebook based CSI reference resources correspond to a first precoding matrix, i.e., a first PMI is a broadband PMI.

As one embodiment, a PMI corresponding to each subband used for a non-codebook based CSI reference resource is reported separately, and the first PMI and first channel information correspond to the same subband used for a non-codebook based CSI reference resource.

As one embodiment, for any subband in the first BWP that is outside the subbands used for the non-codebook based CSI reference resources, a first node does not feed back non-codebook based precoding information.

As one sub-embodiment of the above embodiments, for at least one subband in the first BWP that is outside the subbands used for the non-codebook based CSI reference resources, the first node feeds back a PMI.

As one embodiment, first signaling indicates, from the first BWP, subbands used for the non-codebook based CSI reference resources.

As one embodiment, the first signaling indicates a first subband group from the first BWP, UE feeds back CSI for the first subband group, and the first signaling indicates the subbands used for non-codebook based CSI reference resources from the first subband group.

**Embodiment 7**

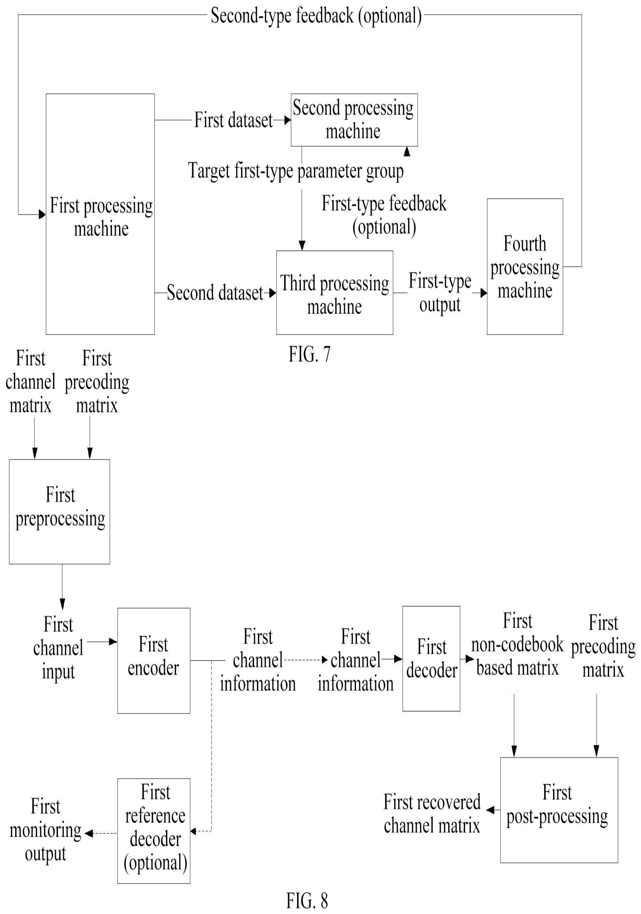

Embodiment 7 illustrates a schematic diagram of an artificial intelligence processing system according to one embodiment of the present application, as shown in FIG. 7. FIG. 7 comprises a first processing machine, a second processing machine, a third processing machine, and a fourth processing machine.

In Embodiment 7, the first processing machine transmits a first dataset to the second processing machine; the second processing machine generates a target first-type parameter group based on the first dataset, the second processing machine transmits the generated target first-type parameter group to the third processing machine, and the third processing machine processes a second dataset using the target first-type parameter group to obtain a first-type output and then transmits the first-type output to the fourth processing machine .

As one embodiment, the third processing machine transmits first-type feedback to the second processing machine, and the first-type feedback is used for triggering recalculation or update of the target first-type parameter group.

As one embodiment, the fourth processing machine transmits second-type feedback to the first processing machine, the second-type feedback is used for generating the first dataset or the second dataset, or the second-type feedback is used for triggering the transmission of the first dataset or the second dataset.

As one embodiment, the second-type feedback comprises second signaling of the present application.

As one embodiment, the fourth processing machine recovers at least one column vector based on the first-type output, and the correlation between the at least one column vector and a column vector in the precoding matrix indicated by the received PMI is used for determining the timing for transmitting the second-type feedback.

As one embodiment, in the first processing machine, generation of the first dataset and the second dataset depends on measurement for a first RS.

As one embodiment, the first dataset does not depend on a codebook-based precoding matrix, that is, training data used for training the target first-type parameter group do not require the removal of codebook-based precoding matrix components.

As one embodiment, the first dataset depends on a codebook-based precoding matrix, that is, the training data used for training the target first-type parameter group also removes the codebook-based precoding matrix components (or projections), just like a first channel matrix. These codebook-based precoding matrices may not be reported to reduce air interface overhead.

As one embodiment, in the first processing machine, the generation of the second dataset depends on a first precoding matrix indicated by a first PMI; that is, interference data transmitted to the third processing machine have had the codebook-based precoding matrix components (or projections) removed.

As one alternative embodiment of the above embodiments, the removal operation may also be performed by the third processing machine.

As one embodiment, the first processing machine and the third processing machine belong to a first node, and the fourth processing machine belongs to a second node.

As one embodiment, the first-type output comprises pieces of plurality of channel information, each of which is non-codebook based precoding information; and first channel information is one of pieces of plurality of channel information.

As one embodiment, the second processing machine belongs to the first node.

The above embodiments avoid transmitting the first dataset to the second node.

As one embodiment, the second processing machine belongs to the second node.

The above embodiments reduce the complexity of the first node.

As one embodiment, the first dataset is training data, the second dataset is interference data, the second processing machine is used for training a model, and the trained model is described by the target first-type parameter group.

As one embodiment, the third processing machine constructs a model according to the target first-type parameter group, then inputs the second dataset into the constructed model to obtain the first-type output, and then transmits the first-type output to the fourth processing machine.

As one sub-embodiment of the above embodiments, the third processing machine comprises a first encoder of the present application, the first encoder is described by the target first-type parameter group, and generation of the first-type output is executed by the first encoder.

As one embodiment, the third processing machine calculates an error between the first-type output and actual data to determine the performance of the trained model; and the actual data is data transmitted by the first processing machine and received after the second dataset. It should be noted that, the influence of codebook-based precoding vectors should have been removed from the actual data, for example, it is the difference between an ideal precoding vector and a PMI-based precoding vector.

The above embodiments are particularly suitable for prediction-related reports.

As one embodiment, the third processing machine recovers a reference dataset using the first-type output, and the error between the reference dataset and the second dataset is used for generating the first-type feedback. It should be noted that, the removed codebook-based precoding vectors may be added into the first-type feedback.

Recovery of the reference dataset typically uses an inverse operation similar to that of the target first-type parameter group, and the above embodiments are particularly suitable for CSI compression-related reports.

As one embodiment, the first-type feedback is used for reflecting the performance of the trained model; and when the performance of the trained model fails to meet requirements, the second processing machine recalculates the target first-type parameter group.

As one sub-embodiment of the above embodiments, the third processing machine comprises a first reference decoder, and the first reference decoder is described by the target first-type parameter group. An input of the first reference decoder comprises the first-type output, and an output of the first reference decoder comprises the reference dataset.

Typically, when the error is excessively large or no update has been made for an excessively long time, the performance of the trained model is deemed to fail to meet requirements.

As one embodiment, the third processing machine belongs to the second node. The first node reports the target first-type parameter group to the second node.

**Embodiment 8**

Embodiment 8 illustrates a flowchart of the transmission of first channel information according to one embodiment of the present application, as shown in FIG. 8. In FIG. 8, a first reference decoder is optional.

In Embodiment 8, first preprocessing, a first encoder, and the first reference decoder belong to a first node; and a first decoder and first post-processing are located at a second node.

After the first preprocessing, a first channel input is obtained from a first channel matrix and a first precoding matrix; the first channel input is passed through the first encoder to generate the first channel information; the first encoder is obtained through training; and the first channel matrix depends on measurement for a first RS.

The first node feeds back the first channel information to the second node through an air interface;

the second node generates a first non-codebook based channel matrix using the first decoder; and a first non-codebook based matrix and the first precoding matrix undergo the first post-processing to obtain a first recovered channel matrix, wherein an input of the first decoder comprises the first channel information, and the first decoder is obtained through training.

Theoretically, the first encoder and the first decoder should be inverse operations to ensure that the first channel input is the same as the first non-codebook based matrix.

As one embodiment, the first preprocessing and the first post-processing are also similar inverse operations to ensure that the first channel matrix is the same as the first recovered channel matrix.

As one embodiment, the first preprocessing and the first post-processing respectively comprise vector addition and vector subtraction operations.

As one embodiment, due to factors such as implementation complexity, or implementation fairness, or air interface overhead, or latency, the first encoder and the first decoder in Embodiment 8 cannot ensure complete cancellation, and thus the first channel input and the first recovered channel matrix cannot be ensured to be completely the same, resulting in different understandings between the two parties regarding the precoding matrix represented by the first channel information.

As one embodiment, the first channel matrix is a raw channel matrix.

As one embodiment, the first channel matrix is an unquantized precoding matrix calculated based on the raw channel matrix.

As one embodiment, a first receiver also comprises the first reference decoder, the input of the first reference decoder comprises the first channel information, and an output of the first reference decoder comprises a first monitoring output.

As one embodiment, an error between the first channel input and the first monitoring output is used by the first node for determining whether the first encoder needs to be updated.

In the above embodiments, the first reference decoder and the first decoder may be generated or maintained independently, and thus, although both of them are intended to execute the inverse operation of the first encoder, they may only be approximate.

As one embodiment, the first channel input belongs to a second dataset in Embodiment 7.

As one embodiment, the training of the first encoder is executed at the first node.

As one embodiment, the training of the first encoder is executed by the second node.

As one embodiment, the first non-codebook based matrix and the first recovered channel matrix are known to only the second node.

As one embodiment, the first recovered channel matrix and the first channel matrix shall not be deemed the same.

## Embodiment 9

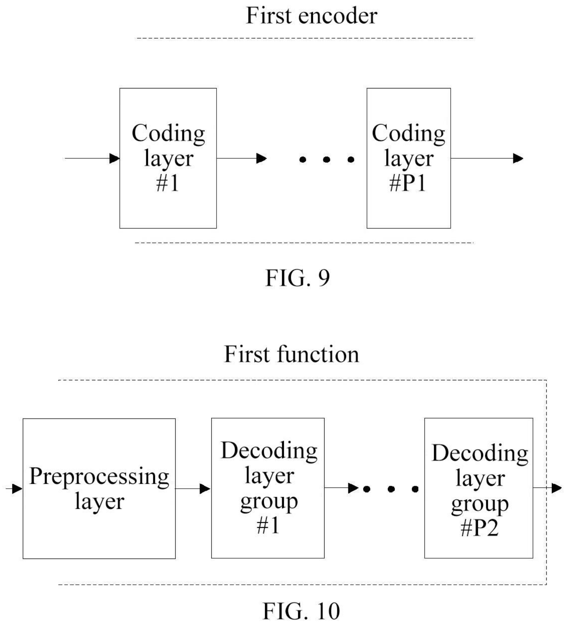

Embodiment 9 illustrates a schematic diagram of a first encoder according to one embodiment of the present application, as shown in FIG. 9. In FIG. 9, the first encoder comprises P1 encoding layers, that is, encoding layers #1, #2, ..., #P1.

As one embodiment, P1 is 2, that is, the P1 encoding layers comprise an encoding layer #1 and an encoding layer #2, and the encoding layer #1 and the encoding layer #2 are a convolutional layer and a fully connected layer, respectively; in the convolutional layer, at least one convolution kernel is used for convolving a first channel input to generate a corresponding feature map, and at least one feature map output by the convolutional layer is reshaped into one vector and input to the fully connected layer; and the fully connected layer converts the one vector into first channel information. For more detailed descriptions, reference may be made to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As one embodiment, P1 is 3, that is, the P1 encoding layers comprise the fully connected layer, the convolutional layer, and a pooling layer.

## Embodiment 10

Embodiment 10 illustrates a schematic diagram of a first function according to one embodiment of the present application, as shown in FIG. 10. In FIG. 10, the first function comprises a preprocessing layer and P2 decoding layer groups, that is, decoding layer groups #1, #2, ..., #P2, and each decoding layer group comprises at least one decoding layer.

A structure of the first function is applicable to a first decoder and a first reference decoder in Embodiment 8.

As one embodiment, the preprocessing layer is one fully connected layer, which expands a size of first channel information to a size of a first channel input.

As one embodiment, any two decoding layer groups in the P2 decoding layer groups have the same structure, the structure comprises the number of decoding layers comprised therein, a size of input parameters and a size of output parameters of each comprised decoding layer, etc.

As one embodiment, a second node indicates P2 and the structure of the decoding layer groups to a first node, and the first node indicates other parameters of the first function through second signaling.

As one embodiment, the other parameters comprise at least one of a threshold of an activation function, a size of a convolution kernel, a stride of the convolution kernel, and a weight between feature maps.

## Embodiment 11

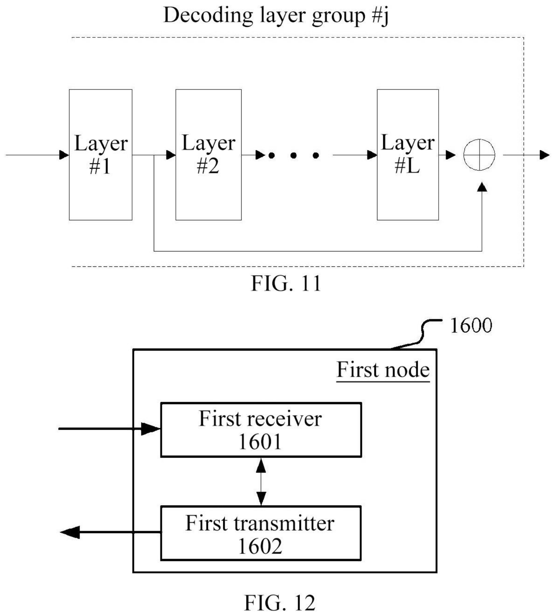

Embodiment 11 illustrates a schematic diagram of one decoding layer group according to one embodiment of the present application, as shown in FIG. 11. In FIG. 11, a decoding layer group #j comprises L layers, that is, layers #1, #2, ..., #L; and the decoding layer group is any one of the P2 decoding layer groups.

As one embodiment, L is 4, the first layer among the L layers is an input layer, and the last three layers of the L layers are all convolutional layers. For more detailed descriptions, reference may be made to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018, etc.

As an embodiment, the L layers comprise at least one convolutional layer and one pooling layer.

## Embodiment 12

Embodiment 12 illustrates a structural block diagram of a processing apparatus used in a first node according to one embodiment of the present application, as shown in FIG. 12. In FIG. 12, a processing apparatus 1600 in the first node comprises a first receiver 1601 and a first transmitter 1602.

The first receiver 1601 receives first signaling and a first RS; and the first transmitter 1602 transmits first channel information and a first PMI.

In Embodiment 12, the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

As one embodiment, the measurement for the first RS is used for generating a first channel matrix, and the first channel matrix is used for generating the first precoding matrix and the first channel information.

As one embodiment, the first transmitter 1602 transmits a first CQI,

wherein generation of the first CQI depends on the first channel matrix.

As one embodiment, any precoding vector used for generating the first channel information is orthogonal to the corresponding precoding vector in the first precoding matrix.

As one embodiment, the first receiver 1601 receives second signaling,

wherein for configuration of the first signaling, the second signaling is used for determining to stop the transmission of the non-codebook based precoding information.

As one embodiment, the first channel information and the first PMI are used by a recipient for determining whether to stop the transmission of the non-codebook based precoding information.

As one embodiment, the first transmitter 1602 transmits first control information, the first control information indicates frequency domain resources for the first channel information, and the frequency domain resources for the first channel information are subsets of frequency domain resources for the first PMI.

As one embodiment, a first node 1600 is one piece of user equipment.

As one embodiment, the first transmitter 1602 comprises at least one of an antenna 452, a transmitting device/receiving device 454, a multi-antenna transmitting processor 457, a transmitting processor 468, a controller/processor 459, a memory 460, and a data source 467 in FIG. 4 of the present application.

As one embodiment, the first transmitter 1602 comprises the antenna 452, the transmitting device/receiving device 454, the multi-antenna transmitting processor 457, the transmitting processor 468, the controller/processor 459, the memory 460, and the data source 467 in FIG. 4 of the present application.

As one embodiment, the first receiver 1601 comprises at least the first five of the antenna 452, a receiving device 454, a multi-antenna receiving processor 458, a receiving processor 456, the controller/processor 459, the memory 460, and the data source 467 in FIG. 4 of the present application.

As one embodiment, the first receiver 1601 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver 1601 comprises at least the first three of the antenna 452, the receiving device 454, the multi-antenna receiving processor 458, the receiving processor 456, the controller/processor 459, the memory 460, and the data source 467 in FIG. 4 of the present application.

### Embodiment 13

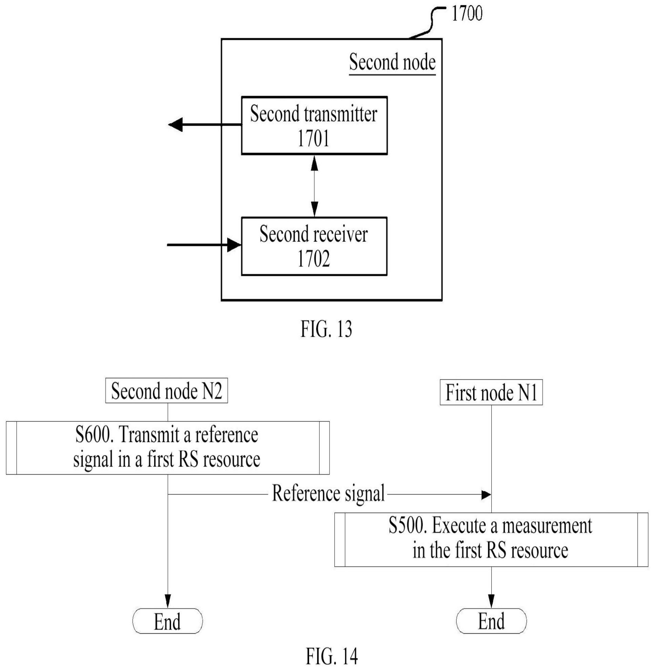

Embodiment 13 illustrates a structural block diagram of a processing apparatus used in a second node according to one embodiment of the present application, as shown in FIG. 13. In FIG. 13, a processing apparatus 1700 in the second node comprises a second transmitter 1701 and a second receiver 1702.

The second transmitter 1701 transmits first signaling and a first RS; and the second receiver 1702 receives first channel information and a first PMI.

In Embodiment 13, the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

As one embodiment, the second receiver 1702 receives a first CQI,

wherein generation of the first CQI depends on a first channel matrix, the measurement for the first RS is used for generating the first channel matrix, and the first channel matrix is used for generating the first precoding matrix and the first channel information.

As one embodiment, the second transmitter 1701 transmits second signaling,

wherein for configuration of the first signaling, the second signaling is used for determining to stop the transmission of the non-codebook based precoding information.

As one embodiment, the second receiver 1702 determines whether to stop the transmission of the non-codebook based precoding information based on the first channel information and the first PMI.

As one embodiment, the second receiver 1702 receives first control information, the first control information indicates frequency domain resources for the first channel information, and the frequency domain resources for the first channel information are subsets of frequency domain resources for the first PMI.

As one embodiment, a second node 1700 is one base station device.

As one embodiment, the second transmitter 1701 comprises an antenna 420, a transmitting device 418, a transmitting processor 416, and a controller/processor 475.

As one embodiment, the second transmitter 1701 comprises the antenna 420, the transmitting device 418, a multi-antenna transmitting processor 471, the transmitting processor 416, and the controller/processor 475.

As one embodiment, the second transmitter 1701 comprises the antenna 420, the transmitting device 418, the transmitting processor 416, and the controller/processor 475.

As one embodiment, the second transmitter 1701 comprises the antenna 420, the transmitting device 418, the multi-antenna transmitting processor 471, the transmitting processor 416, and the controller/processor 475.

As one embodiment, the second receiver 1702 comprises the antenna 420, the receiving device 418, a multi-antenna receiving processor 472, a receiving processor 470, and the controller/processor 475.

As one embodiment, the second receiver 1702 comprises the controller/processor 475.

### Embodiment 14

Embodiment 14 illustrates a flowchart of measurements in a first RS resource group according to one embodiment of the present application, as shown in FIG. 14. The first RS resource group comprises a first RS resource, and the first RS resource is occupied by a first RS.

A first node N1 executes measurements in the first RS resource group in step S500; and a second node N2 transmits reference signals in at least part of RS resources of the first RS resource group.

As one embodiment, the at least part of the RS resources comprises the first RS resource used for channel measurement.

The specific implementation of the measurements executed by the first node N1 in the first RS resource group is determined by hardware device vendors themselves, and one non-limiting example is given below:

a first node measures a channel parameter matrix for each PRB, and the channel parameter matrix has Nt rows and Nr columns, with each element being a channel impulse response; Nt and Nr are the number of antenna ports and the number of receiving antennas in one RS resource, respectively; the first node combines raw channel matrices measured on all PRBs within each subband to obtain a raw channel matrix for each subband; and matrix decomposition is performed on the combined raw channel matrix to obtain an unquantized precoding matrix.

As one embodiment, the second node N2 maintains zero power in at least one RS resource of the first RS resource group, and the at least one RS resource is used for interference measurement.

## Embodiment 15

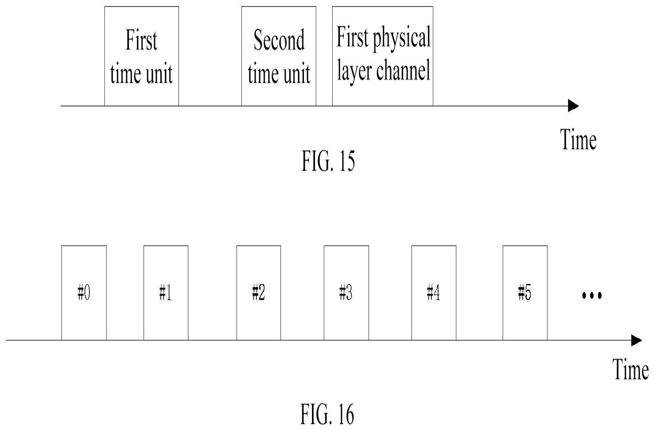

Embodiment 15 illustrates a schematic diagram of a CSI reference resource according to one embodiment of the present application, as shown in FIG. 15. In FIG. 15, a first time unit and a second time unit are before a first physical layer channel.

In Embodiment 15, CSI reference resources of first channel information and CSI reference resources of a first PMI are orthogonal in time domain.

As one embodiment, the CSI reference resource of the first channel information and the CSI reference resource of the first PMI are the first time unit and the second time unit in time domain, respectively.

The above embodiment is particularly suitable for scenarios where a time required for calculating the first channel information is greater than a time required for calculating the first PMI.

As one embodiment, the CSI reference resource of the first channel information and the CSI reference resource of the first PMI are the second time unit and the first time unit in time domain, respectively.

The above embodiment is particularly suitable for scenarios where a time required for calculating the first channel information is less than a time required for calculating the first PMI.

As one embodiment, the first time unit and the second time unit are one slot, respectively.

As one embodiment, the first time unit and the second time unit respectively comprise a positive integer number of multi-carrier symbols.

As one embodiment, the multi-carrier symbol is an OFDM (Orthogonal Frequency Division Multiplexing) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, a time interval between the first time unit and the first physical layer channel is configurable or is default; and a time interval between the second time unit and the first physical layer channel is configurable or is default.

One advantage of Embodiment 15 is that it increases the density of channel matrix feedback in time domain, improving the performance of downlink transmission.

It should be noted that, Embodiment 15 only describes the time domain characteristics of the CSI reference resources, and this does not prevent overlapping of CSI reference resources in frequency domain. For example, frequency domain resources for the first PMI comprise frequency domain resources for the first channel information.

## Embodiment 16

Embodiment 16 illustrates a schematic diagram of time domain resources occupied by CSI according to one embodiment of the present application, as shown in FIG. 16. In FIG. 16, a square filled with #x represents one time unit, and x (0, 1, 2, ...) is an index of this time unit.

In Embodiment 16, a feedback period of a PMI is greater than a feedback period of a non-codebook based precoding information, and the non-codebook based precoding information transmitted in a plurality of time units corresponds to the same PMI.

As one embodiment, the non-codebook based precoding information transmitted in one time unit corresponds to the PMI reported in the same time unit or the most recently reported PMI.

As one embodiment, #0, #1, ..., #5 in FIG. 16 are all configured for a report of the non-codebook based precoding information, and only the time units filled with gray squares are configured for PMI report, wherein the non-codebook based precoding information reported in time units #2, #3, and #4 corresponds to the PMI reported in #2.

Considering that the non-codebook based precoding information is a more detailed channel parameter than the PMI, the above method minimizes air interface overhead as much as possible while improving feedback accuracy.

As one embodiment, each report of the non-codebook based precoding information comprises one corresponding control information, and the corresponding control information indicates a subband for which the non-codebook based precoding information is reported.

As one embodiment, the report of the non-codebook based precoding information and the corresponding control information are transmitted in the same physical layer channel.

As one embodiment, first channel information and first control information are transmitted on the same physical layer channel, and a first PMI is transmitted on another physical layer channel.

As one embodiment, first signaling is used for configuring time units in FIG. 16.

As one embodiment, the time units are slots or subframes.

As one embodiment, the time units comprise a plurality of OFDM symbols.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. User equipment, a terminal and UE in the present application include but are not limited to drones, communication modules on drones, remote-controlled airplanes, aircrafts, small airplanes, mobile phones, tablet computers, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macro cellular base stations, micro cellular base stations, Femtocells, relay base stations, gNBs (NR nodes B), TRPs (Transmitter Receiver Points), and other wireless communication devices.

Those skilled in the art should understand that the present application may be implemented in other specified forms without departing from its core or basic features. Therefore, the embodiments disclosed at present should be regarded as descriptive rather than restrictive in any way. The scope of the invention is determined by the appended claims rather than the foregoing description, and all modifications within their equivalent meanings and areas are considered to be comprised therein.

**Claims**

1. A first node for wireless communication, **characterized in that** it comprises:

    a first receiver receiving first signaling and a first RS;
    a first transmitter transmitting first channel information and a first PMI,
    wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

2. The first node according to claim 1, **characterized in that** the measurement for the first RS is used for generating a first channel matrix, and the first channel matrix is used for generating the first precoding matrix and the first channel information.

3. The first node according to claim 2, **characterized in that** it comprises:

    the first transmitter transmitting a first CQI,
    wherein generation of the first CQI depends on the first channel matrix.

4. The first node according to any one of claims 1 to 3, **characterized in that** any precoding vector used for generating the first channel information is orthogonal to a corresponding precoding vector in the first precoding matrix.

5. The first node according to any one of claims 1 to 4, **characterized in that** it comprises:

    the first receiver receiving second signaling,
    wherein for configuration of the first signaling, the second signaling is used for determining to stop the transmission of the non-codebook based precoding information.

6. The first node according to any one of claims 1 to 5, **characterized in that** the first channel information and the first PMI are used by a recipient for determining whether to stop the transmission of the non-codebook based precoding information.

7. The first node according to any one of claims 1 to 6, **characterized in that** it comprises:
the first transmitter transmitting first control information, the first control information indicating frequency domain resources for the first channel information, and the frequency domain resources for the first channel information being a subset of frequency domain resources for the first PMI.

8. A second node for wireless communication, **characterized in that** it comprises:

a second transmitter transmitting first signaling and a first RS; and
a second receiver receiving first channel information and a first PMI,
wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

9. The second node according to claim 8, **characterized in that** it comprises:

the second receiver receiving a first CQI,
wherein generation of the first CQI depends on a first channel matrix, the measurement for the first RS is used for generating the first channel matrix, and the first channel matrix is used for generating the first precoding matrix and the first channel information.

10. The second node according to any one of claims 8 to 9, **characterized in that** it comprises:

the second transmitter transmitting second signaling,
wherein for configuration of the first signaling, the second signaling is used for determining to stop the transmission of the non-codebook based precoding information.

11. The second node according to any one of claims 8 to 10, **characterized in that** it comprises:
the second receiver determining whether to stop the transmission of the non-codebook based precoding information based on the first channel information and the first PMI.

12. A method used in a first node for wireless communication, **characterized in that** it comprises:

receiving first signaling and a first RS; and
transmitting first channel information and a first PMI,
wherein the first signaling is used for determining the first RS; measurement for the first RS is used for generating the first channel information and the first PMI; the first channel information depends on a first precoding matrix, and the first precoding matrix is indicated by the first PMI; and the first channel information is non-codebook based precoding information.

13. The method used in a first node according to claim 12, **characterized in that**
the measurement for the first RS is used for generating a first channel matrix, and the first channel matrix is used for generating the first precoding matrix and the first channel information.

14. The method used in a first node according to claim 12 or 13, **characterized in that** it comprises

transmitting a first CQI,
wherein generation of the first CQI depends on the first channel matrix.

15. The method used in a first node according to any one of claims 12 to 14, **characterized in that**
any precoding vector used for generating the first channel information is orthogonal to a corresponding precoding vector in the first precoding matrix.

16. The method used in a first node according to any one of claims 12 to 15, **characterized in that** it comprises

receiving second signaling,
wherein for configuration of the first signaling, the second signaling is used for determining to stop the transmission of the non-codebook based precoding information.

17. The method used in a first node according to any one of claims 12 to 16, **characterized in that**
the first channel information and the first PMI are used by a recipient for determining whether to stop the transmission of the non-codebook based precoding information.

18. The method used in a first node according to any one of claims 12 to 17, **characterized in that**
first control information is transmitted, the first control information indicating frequency domain resources for the first channel information, and the frequency domain resources for the first channel information being a subset of frequency domain resources for the first PMI.

19. A method used in a second node for wireless communication, **characterized in that** it comprises:

transmitting first signaling and a first RS; and
receiving first channel information and a first PMI,
wherein the first signaling is used for determining the first RS; measurement for the first RS is used for generating the first channel information

and the first PMI; the first channel information depends on a first precoding matrix, and the first precoding matrix is indicated by the first PMI; and the first channel information is non-codebook based precoding information.

20. The method used in a second node according to claim 19, **characterized in that** it comprises

receiving a first CQI,
wherein generation of the first CQI depends on a first channel matrix, the measurement for the first RS is used for generating the first channel matrix, and the first channel matrix is used for generating the first precoding matrix and the first channel information.

21. The method used in a second node according to claim 19 or 20, **characterized in that** it comprises

transmitting second signaling,
wherein for configuration of the first signaling, the second signaling is used for determining to stop the transmission of the non-codebook based precoding information.

22. The method used in a second node according to any one of claims 19 to 21, **characterized in that** it comprises
determining whether to stop the transmission of the non-codebook based precoding information based on the first channel information and the first PMI.

100

First node

101

Receive first signaling and a first RS

102

Send first channel information and a first PMI

FIG. 1

EPS 200

220

HSS

NR−RAN
202

201

UE

203

NR Node B

211

MME/AMF/
UPF

214

Other
MME/AMF/UPF

204

Other NR
nodes B

212

S−GW

213

P−GW

230

Internet service

5G−CN/EPC
210

FIG. 2

Control plane

300

L3

RRC — 306

305

PDCP — 304

L2

RLC — 303

MAC — 302

L1

PHY — 301

User plane

350

SDAP — 356

355

L2

PDCP — 354

RLC — 353

MAC — 352

L1

PHY — 351

FIG. 3

FIG. 4

FIG. 5

FIG. 6

Subband

Subbands of CSI reference resources used for non-codebook based precoding information

Frequency

Second-type feedback (optional)

First processing machine

First dataset → Second processing machine

Target first-type parameter group

First-type feedback (optional)

Fourth processing machine

Second dataset → Third processing machine

First-type output

FIG. 7

First channel matrix    First precoding matrix

First preprocessing

First channel input → First encoder

First channel information

First channel information

First decoder → First non-codebook based matrix    First precoding matrix

First post-processing

First recovered channel matrix ←

First monitoring output ← First reference decoder (optional)

FIG. 8

First encoder

FIG. 9

First function

FIG. 10

Decoding layer group #j

FIG. 11

FIG. 12

1700

Second node

Second transmitter
1701

Second receiver
1702

FIG. 13

Second node N2

First node N1

S600. Transmit a reference
signal in a first RS resource

Reference signal

S500. Execute a measurement
in the first RS resource

End

End

FIG. 14

| First time unit | | Second time unit | First physical layer channel |

FIG. 15

| #0 | #1 | #2 | #3 | #4 | #5 | ...

FIG. 16

## INTERNATIONAL SEARCH REPORT

| International application No. |
|---|
| **PCT/CN2024/083729** |

| | |
|---|---|
| **A. CLASSIFICATION OF SUBJECT MATTER** | |
| H04B7/0456(2017.01)i | |

According to International Patent Classification (IPC) or to both national classification and IPC

**B. FIELDS SEARCHED**

Minimum documentation searched (classification system followed by classification symbols)

IPC:H04B, H04W

Documentation searched other than minimum documentation to the extent that such documents are included in the fields searched

Electronic data base consulted during the international search (name of data base and, where practicable, search terms used)

3GPP, CJFD, CNTXT, ENTXTC, CNKI, WPABS: 非码本, 信令, 预编码, 参考信号, 信道状态信息, 信道信息, 预编码向量, RRC, DCI, MAC-CE, RS, codebook, coding, csi, non-codebook, PMI, precoding

**C. DOCUMENTS CONSIDERED TO BE RELEVANT**

| Category* | Citation of document, with indication, where appropriate, of the relevant passages | Relevant to claim No. |
|---|---|---|
| A | CN 107689823 A (HUAWEI TECHNOLOGIES CO., LTD.) 13 February 2018 (2018-02-13) description, paragraphs 35-44, 75-77, 92-108 and 116-120 | 1-22 |
| A | WO 2023037527 A1 (NTT DOCOMO INC.) 16 March 2023 (2023-03-16) description, paragraphs 11-35 | 1-22 |
| A | CN 101860420 A (ZTE CORP.) 13 October 2010 (2010-10-13) entire description | 1-22 |
| A | CN 115022840 A (SHANGHAI LANGBO COMMUNICATION TECHNOLOGY CO., LTD.) 06 September 2022 (2022-09-06) entire description | 1-22 |
| A | WO 2022133727 A1 (GUANGDONG OPPO MOBILE TELECOMMUNICATIONS CORP., LTD.) 30 June 2022 (2022-06-30) entire description | 1-22 |
| A | CATT, CMCC, RITT. "R1-090943 "Non-codebook-based Precoding for Uplink transmission"" *3GPP TSG RAN WG1 #56*, 04 February 2009 (2009-02-04), entire document | 1-22 |

| ☑ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 May 2024** | **13 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/083729**

**C.    DOCUMENTS CONSIDERED TO BE RELEVANT**

| Category* | Citation of document, with indication, where appropriate, of the relevant passages | Relevant to claim No. |
|---|---|---|
| A | Nokia, Nokia Siemens Networks. "R1-091775 "Performance and implementation requirement of non-codebook precoding""<br>*3GPP TSG RAN WG1 Meeting #57*, 29 April 2009 (2009-04-29),<br> entire document | 1-22 |

Form PCT/ISA/210 (second sheet) (July 2022)

**INTERNATIONAL SEARCH REPORT**
Information on patent family members

| International application No. |
| --- |
| **PCT/CN2024/083729** |

| Patent document cited in search report | | | Publication date (day/month/year) | Patent family member(s) | | | Publication date (day/month/year) |
| --- | --- | --- | --- | --- | --- | --- | --- |
| CN | 107689823 | A | 13 February 2018 | US | 2016344465 | A1 | 24 November 2016 |
| | | | | US | 9729222 | B2 | 08 August 2017 |
| | | | | EP | 4170919 | A1 | 26 April 2023 |
| | | | | ZA | 201504716 | B | 25 May 2016 |
| | | | | US | 2019173550 | A1 | 06 June 2019 |
| | | | | US | 10484069 | B2 | 19 November 2019 |
| | | | | US | 2017331542 | A1 | 16 November 2017 |
| | | | | US | 10230443 | B2 | 12 March 2019 |
| | | | | WO | 2014101055 | A1 | 03 July 2014 |
| | | | | EP | 2947787 | A1 | 25 November 2015 |
| | | | | EP | 2947787 | A4 | 15 February 2017 |
| | | | | BR | 112015015418 | A2 | 11 July 2017 |
| | | | | BR | 112015015418 | B1 | 07 February 2023 |
| | | | | US | 2015304008 | A1 | 22 October 2015 |
| | | | | US | 9438328 | B2 | 06 September 2016 |
| | | | | MX | 2015008407 | A | 23 September 2015 |
| | | | | MX | 344041 | B | 01 December 2016 |
| | | | | US | 2020389217 | A1 | 10 December 2020 |
| | | | | US | 11431392 | B2 | 30 August 2022 |
| | | | | SG | 11201505013 | UA | 28 August 2015 |
| | | | | MY | 161041 | A | 14 April 2017 |
| | | | | US | 2022376762 | A1 | 24 November 2022 |
| | | | | US | 11831379 | B2 | 28 November 2023 |
| | | | | JP | 2016507951 | A | 10 March 2016 |
| | | | | JP | 6118423 | B2 | 19 April 2017 |
| | | | | EP | 3855638 | A1 | 28 July 2021 |
| | | | | EP | 3855638 | B1 | 28 September 2022 |
| | | | | EP | 3197070 | A1 | 26 July 2017 |
| | | | | EP | 3197070 | B1 | 22 May 2019 |
| | | | | RU | 2015130998 | A | 31 January 2017 |
| | | | | RU | 2618508 | C2 | 04 May 2017 |
| | | | | EP | 3588801 | A1 | 01 January 2020 |
| | | | | EP | 3588801 | B1 | 24 February 2021 |
| | | | | US | 2020044713 | A1 | 06 February 2020 |
| | | | | US | 10715239 | B2 | 14 July 2020 |
| WO | 2023037527 | A1 | 16 March 2023 | None | | | |
| CN | 101860420 | A | 13 October 2010 | WO | 2011157217 | A1 | 22 December 2011 |
| | | | | CN | 101860420 | B | 12 August 2015 |
| CN | 115022840 | A | 06 September 2022 | None | | | |
| WO | 2022133727 | A1 | 30 June 2022 | CN | 116134922 | A | 16 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAO-KAI WEN**. Deep Learning for Massive MIMO CSI Feedback. *IEEE WIRELESS COMMUNICATIONS LETTERS*, October 2018, vol. 7 (5)